# EUROPÄISCHE PATENTANMELDUNG

(11) **EP 1 030 436 A2**
(43) Veröffentlichungstag der Anmeldung: **23.08.2000**
(21) Anmeldenummer: 99124318.9
(22) Anmeldetag: 06.12.1999
(51) Int. Cl.: H02M 5/293

(54) **Schaltungsanordnung für einen Wechselstromsteller**

(30) Priorität: 19.02.1999 DE 29902942 U
(71) Anmelder: AEG SVS Power Supply Systems GmbH, 59581 Warstein-Belecke (DE)
(72) Erfinder: Vollmar, Wilfried, 59494 Soest-Deiringsen (DE)
(74) Vertreter: Basfeld, Rainer, Dr. Dipl.-Phys.

(57) **Zusammenfassung**

Schaltungsanordnung für einen Wechselstromsteller mit einer an eine Wechselspannungsquelle (1, 2) anschließbaren Wechselstromlast (4, 5) mit einem induktiven Anteil, wobei in Reihe zur Wechselstromlast (4, 5) gesteuerte Laststromschaltmittel (6, 7, 8, 9) und parallel zur Wechselstromlast ein Freilaufkreis mit gesteuerten Freilaufschaltmitteln (14, 15, 16, 17) angeordnet sind, wobei die Laststromschaltmittel (6, 7, 8, 9) und die Freilaufschaltmittel (14, 15, 16, 17) hinsichtlich der von ihnen umfaßten Bauteile und der Schaltungsanordnungen dieser Bauteile im wesentlichen, vorzugsweise exakt, identisch sind.

## Beschreibung

Die vorliegende Erfindung betrifft eine Schaltungsanordnung für einen Wechselstromsteller, insbesondere eine Schaltungsanordnung mit einer an eine Wechselspannungsquelle anschließbaren Wechselstromlast mit einem induktiven Anteil, wobei in Reihe zur Wechselstromlast gesteuerte Laststromschaltmittel und parallel zur Wechselstromlast ein Freilaufkreis mit gesteuerten Freilaufschaltmitteln angeordnet sind.

Eine derartige Schaltungsanordnung ist beispielsweise aus der europäischen Patentschrift EP 0 221 574 B1 bekannt. Darin wird eine Schaltungsanordnung für einen gepulsten Wechselstromsteller beschrieben, bei dem die Ansteuerung der Laststromschaltmittel mit einer Pulsfrequenz erfolgt, die wesentlich über der Wechselspannungsfrequenz liegt. Insbesondere für derartig hochfrequente Schaltfrequenzen eines Wechselstromstellers sind gesteuerte Halbleiterschalter als entsprechende Freilaufschaltmittel unbedingt erforderlich. Gemäß dem Stand der Technik werden für den Freilaufkreis teilweise relativ komplizierte Schaltungsanordnungen gewählt, so daß die gesamte Schaltungsanordnung für den Wechselstromsteller aus relativ vielen unterschiedlichen Bauteilen besteht, die aufwendig miteinander verschaltet werden müssen. Damit verbunden sind entsprechend hohe Herstellungskosten der aus dem Stand der Technik bekannten Schaltungsanordnungen für einen Wechselstromsteller.

Das der vorliegenden Erfindung zugrundeliegende Problem ist die Schaffung einer Schaltungsanordnung der eingangs genannten Art, die einfacher und kostengünstiger aufgebaut ist.

Dies wird erfindungsgemäß dadurch erreicht, daß die Laststromschaltmittel und die Freilaufschaltmittel hinsichtlich der von ihnen umfaßten Bauteile und der Schaltungsanordnungen dieser Bauteile im wesentlichen identisch sind. Durch die Wahl identischer Bauteile für den Schaltkreis und den Freilaufkreis reduziert sich die Anzahl der unterschiedlichen in der Schaltanordnung verwendeten Bauteile. Insbesondere können sowohl die Laststromschaltmittel als auch die Freilaufschaltmittel Teile eines Kombinationsbauteils sein, wobei hier handelsübliche auf dem Markt erhältliche Kombinationsbauteile verwendet werden können. Derartige Kombinationsbauteile müssen nur zur Realisierung der erfindungsgemäßen Schaltungsanordnung entsprechend verschaltet beziehungsweise gebontet werden. Ein deratiges Bonten von preisgünstig in großen Stückzahlen erhältlichen Kombinationsbauteilen zur Realisierung der erfindungsgemäßen Schaltungsanordnung erweist sich im Herstellungsprozeß als wesentlich weniger kostenaufwendig als der Aufbau aus dem Stand der Technik bekannter komplizierter Schaltungsanordnungen mit vielen verschiedenen Bauteilen. Als Kombinationsbauteile können beispielsweise Bauteile wie der Tripack der Firma eupec oder dergleichen Verwendung finden. Gemäß einer bevorzugten Ausführungsform der vorliegenden Erfindung umfassen die Laststromschaltmittel und die Freilaufschaltmittel jeweils zwei vorzugsweise identische Halbleiterschalter und jeweils zwei parallel zu diesen angeordnete Inversionsdioden. Als Halbleiterschalter können beispielsweise IGBT-Bauteile, MOSFETs, Bipolartransistoren, GTOs, MCTs, Thyristoren oder Triacs Verwendung finden.

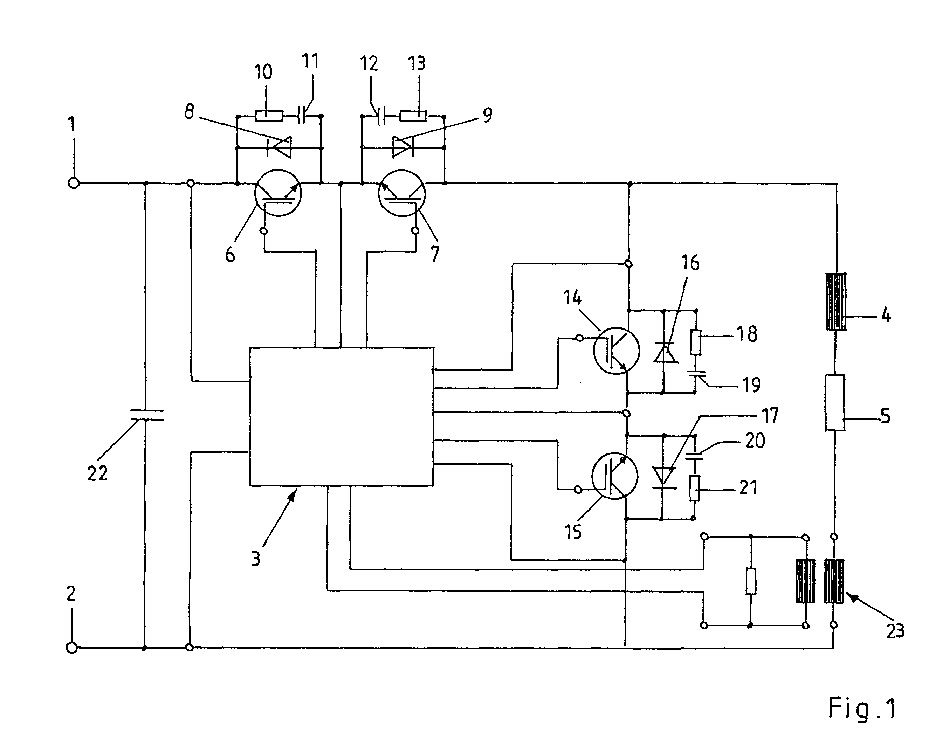

Weitere Vorteile und Merkmale der vorliegenden Erfindung werden deutlich anhand der nachfolgenden Beschreibung bevorzugter Ausführungsbeispiele unter Bezugnahme auf die beiliegende Abbildung. Darin zeigt
- Fig. 1: eine erfindungsgemäße Schaltungsanordnung für einen Wechselstromsteller.

Die in Fig. 1 abgebildete Schaltungsanordnung umfaßt zwei Anschlußklemmen 1, 2 einer Wechselspannung, an denen eine induktive Last 4 und eine ohmsche Last 5 anliegen. Der Laststrom wird geschaltet durch zwei Halbleiterschalter 6, 7 in dem sogenannten Schaltkreis. Im abgebildeten Ausführungsbeispiel sind die Halbleiterschalter 6, 7 als IGBT-Bauteile ausgeführt. Anstelle dieser IGBT-Bauteile können auch MOSFETs, Bipolartransistoren, GTOs, MCTs, Thyristoren oder Triacs Verwendung finden.

Die Laststromstellung durch die beiden Halbleiterschalter 6, 7 wird durch eine Regeleinrichtung 3 gesteuert, mitels der dem gewünschten Laststrom entsprechende Stellwerte vorgegeben werden können. Parallel zu den beiden Halbleiterschaltern 6, 7 sind jeweils in bekannter Weise eine Inversionsdiode 8, 9 sowie weiterhin jeweils ein RC-Glied angeordnet, das jeweils aus einem Widerstand 10, 13 und einem Kondensator 11, 12 besteht.

Bei einer derartig gestellten Leistungsaufnahme der Last 4, 5 ergeben sich bei Wechselstromlasten mit induktivem Anteil aus dem Stand der Technik hinlänglich bekannte Probleme in Form von Induktionsspannungen, die entstehen, wenn die als Laststromschaltmittel dienenden Halbleiterschalter 6, 7 geöffnet werden. Um diese Induktionsspannungen ohne induktive Leistungsverluste und für die Halbleiter gefährliche Störspannungen abzubauen, wird in der vorliegenden Schaltungsanordnung ähnlich wie im Stand der Technik ein sogenannter Freilaufkreis genutzt, der parallel zur Last 4, 5 angeordnet ist. Im abgebildeten Ausführungsbeispiel besteht der Freilaufkreis aus zwei Halbleiterschaltern 14, 15, die wie die Halbleiterschalter 6, 7 als IGBT-Bauteile ausgeführt sind. Es besteht auch die Möglichkeit, die Halbleiterschalter 14, 15 wie die Halbleiterschalter 6, 7 als MOSFETs, Bipolartransistoren, GTOs, MCTs, Thyristoren oder Triacs auszuführen. Erfindungswesentlich ist, daß jeweils für die Halbleiterschalter 6, 7 und die Halbleiterschalter 14, 15 identische Bauteile in identischer Schaltungsanordnung verwendet werden. Daher sind zu den Halbleiterschaltern 14, 15 parallel jeweils eine Inversionsdiode 16, 17 sowie ebenfalls parallel jeweils ein RC-Glied mit Widerständen 18, 21 und Kondensatoren 19, 20 angeordnet.

Wie aus dem Stand der Technik bekannt, wird dann, wenn die Halbleiterschalter 14, 15 im Freilaufkreis wechselnd im richtigen Zyklus der speisenden Wechselspannung schließen oder öffnen, die induktive Energie, die beim Schalten der Halbleiterschalter 6, 7 im Schaltkreis entsteht, der Wechselstromlast 4, 5 wieder zugeführt. Hierzu werden die Halbleiterschalter 14, 15 im Freilaufkreis ebenfalls von der Regeleinrichtung 3 angesteuert.

Eine typische Bedingung für Schaltungsanordnungen der vorliegenden Art ist die Tatsache, daß der entsprechende Halbleiterschalter 6, 7 im Schaltkreis erst dann angesteuert werden darf, wenn der Strom der vorausgegangenen Halbschwingung im Lastkreis zu Null geworden ist. Daher ist in derartigen Schaltungsanordnungen eine Erfassung dieses Stromes erforderlich. Dies geschieht in dem abgebildeten Ausführungsbeispiel durch die Stromerfassungseinheit 23, die den induktiv erfaßten Strommeßwert an die Regeleinrichtung 3 weitergibt. Weiterhin ist in dem vorliegenden Ausführungsbeispiel noch ein parallel zu den Anschlußklemmen 1, 2 angeordneter als Tiefpaßfilter geschalteter Kondensator 22 abgebildet.

Durch die Verwendung exakt gleicher Baugruppen im Schaltkreis und im Freilaufkreis können für diese am Markt vorhandene Kombinationsbauteile, wie zum Beispiel der Tripack der Firma eupec oder ähnliche, mit einer Kombination von beispielsweise IGBT-Bauteilen verwendet werden. Derartige am Markt vorhandene Kombinationsbauteile werden zur Realisierung der vorliegenden oder einer ähnlich wirkenden Schaltung anders als in der herkömmlichen Art, die beispielsweise den Einsatz bei Wechselrichtern für Antriebe und dergleichen vorsieht, verschaltet beziehungsweise gebontet.

## Patentansprüche

1. Schaltungsanordnung für einen Wechselstromsteller mit einer an eine Wechselspannungsquelle (1, 2) anschließbaren Wechselstromlast (4, 5) mit einem induktiven Anteil, wobei in Reihe zur Wechselstromlast (4, 5) gesteuerte Laststromschaltmittel (6, 7, 8, 9) und parallel zur Wechselstromlast ein Freilaufkreis mit gesteuerten Freilaufschaltmitteln (14, 15, 16, 17) angeordnet sind, dadurch gekennzeichnet, daß die Laststromschaltmittel (6, 7, 8, 9) und die Freilaufschaltmittel (14, 15, 16, 17) hinsichtlich der von ihnen umfaßten Bauteile und der Schaltungsanordnungen dieser Bauteile im wesentlichen, vorzugsweise exakt, identisch sind.

2. Schaltungsanordnung nach Anspruch 1, dadurch gekennzeichnet, daß die Laststromschaltmittel und die Freilaufschaltmittel jeweils zwei, vorzugsweise identische, Halbleiterschalter (6, 7, 14, 15) sowie vorzugsweise jeweils zwei parallel zu diesen angeordnete Inversionsdioden (8, 9, 16, 17) umfassen.

3. Schaltungsanordnung nach Anspruch 2, dadurch gekennzeichnet, daß als Halbleiterschalter (6, 7, 14, 15) IGBT-Bauteile, MOSFETs, Bipolartransistoren, GTOs, MCTs, Thyristoren oder Triacs Verwendung finden.

4. Schaltungsanordnung nach einem der Ansprüche 1 bis 3, dadurch gekennzeichnet, daß sowohl die Laststromschaltmittel (6, 7, 8, 9) als auch die Freilaufschaltmittel (14, 15, 16, 17) Teile eines Kombinationsbauteils sind.

5. Schaltungsanordnung nach Anspruch 4, dadurch gekennzeichnet, daß das Kombinationsbauteil zur Realisierung der Schaltungsanordnungen im Schaltkreis und im Freilaufkreis entsprechend gebontet ist.
